Europäisches Patentamt

European Patent Office

Office européen des brevets

(19)

(11)  EP 0 749 019 B1

(12)  FASCICULE DE BREVET EUROPEEN

(45) Date de publication et mention
de la délivrance du brevet:
**04.10.2001 Bulletin 2001/40**

(51) Int Cl.⁷: **G01S 13/28**, G01S 13/90

(21) Numéro de dépôt: **96401258.7**

(22) Date de dépôt: **11.06.1996**

(54) **Procédé de réduction des ambiguités dans un radar à synthèse d'ouverture et radar mettant en oeuvre le procédé**

Verfahren zum Vermindern von Mehrdeutigkeiten in einem Radar mit synthetischer Apertur und Radar zur Durchführung dieses Verfahrens

Method for reducing ambiguities in a synthetic aperture radar, and radar for carrying out this method

(84) Etats contractants désignés:
**DE GB IT**

(30) Priorité: **15.06.1995 FR 9507147**

(43) Date de publication de la demande:
**18.12.1996 Bulletin 1996/51**

(73) Titulaire: **ALCATEL**
**75382 Paris Cédex 08 (FR)**

(72) Inventeurs:
• **Gouenard, Sophie**
**31400 Toulouse (FR)**

• **Suinot, Noel**
**31750 Escalquens (FR)**

(74) Mandataire: **Smith, Bradford Lee et al**
**COMPAGNIE FINANCIERE ALCATEL**
**Dépt. Propriété Industrielle**
**30, avenue Kléber**
**75116 Paris (FR)**

(56) Documents cités:
**DE-A- 4 235 071**          **GB-A- 2 208 933**
**US-A- 4 096 478**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

**Description**

Le domaine de l'invention est celui du radar à synthèse d'ouverture (connu de l'homme de l'art par l'acronyme SAR pour Synthetic Aperture Radar en anglais), et plus particulièrement celui de l'observation de la terre par satellite. L'invention sera avantageusement utilisée pour des missions du radar spatial à partir d'un satellite artificiel en orbite autour d'un corps céleste. Elle peut aussi trouver application à bord des aéronefs ou d'autre engins tels des missiles, des hélicoptères ou des drones,... qui évoluent à proximité de la terre ou de tout autre corps céleste (planète, astéroïde, comète, nuages interstellaires,... et cetera).

En particulier, l'invention sera avantageusement utilisée pour effectuer des observations haute résolution, avec fort coefficient de rétro diffusion, de réflectivité radar du sol. En effet, l'invention permet de réduire sinon d'éliminer des ambiguïtés occasionnées par la réception d'échos provenant d'impulsions radar qui ont précédé ou suivi l'impulsion dont la réception et le traitement sont en cours en fonctionnement normal.

Il est connu de confier à des satellites circulant en orbite basse des missions de télédétection hyperfréquence par radar hyperfréquence. Le satellite défilant en orbite basse se déplace par rapport à un point fixe sur la surface de la terre, à l'opposé d'un satellite géostationnaire.

Ce déplacement permet au satellite d'observation de survoler la terre, selon une direction déterminée par son orbite. Les mesures radar sont effectuées à des moments successifs par l'émission d'impulsions brèves d'énergie électromagnétique à une fréquence de répétition d'impulsion (connu de l'homme de l'art par l'acronyme PRF pour "pulse repetition frequency" en anglais), chaque impulsion étant en outre caractérisée par des qualités spectrales et par leur variation au cours de l'impulsion.

Dans les intervalles entre les impulsions d'émission, l'équipement radar reçoit les échos radar provenant du sol ou de tout autre objet réfléchissant illuminé par des impulsions précédentes. Le signal ainsi reçu est ensuite traité et analysé pour extraire des informations qu'il comporte, telle la distance parcouru (par temps de trajet) la réflectivité relative de l'objet, ....

Les mesures radar ainsi effectuées à des moments successifs, tout au long du trajet du satellite, permettent de dresser une cartographie des paramètres mesurés en fonction de la position du satellite ou de tout autre engin servant de plate-forme pour le radar.

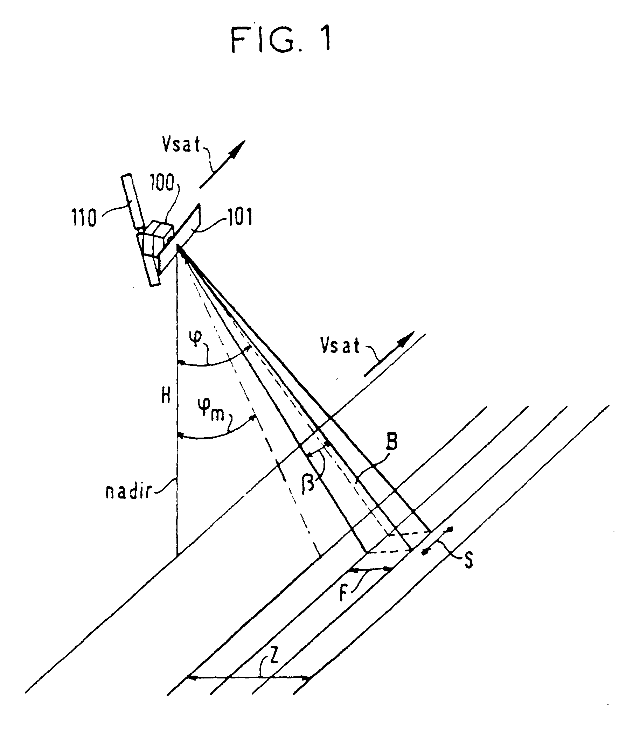

Un satellite de télédétection radar, connu de l'art antérieur, est montré schématiquement sur la figure 1.

Sur cette figure 1, un satellite 100 survole la terre à une hauteur H de quelques centaines de kms, avec une vitesse $\bar{V}_{sat}$ qui dépend des paramètres géométriques de l'orbite. Le satellite est muni d'équipements nécessaires à sa mission tels le panneau solaire 110 et l'antenne radar 101. Dans sa configuration la plus simple, un satellite de télédétection radar illumine, dans un plan d'illumination dit "transverse" contenant le nadir et perpendiculaire à la vitesse $\bar{V}_{sat}$, une fauchée F au sol lors de son passage, d'une largeur G.

Par convention, les mesures selon une direction dans un premier plan contenant le nadir et perpendiculaire à la vitesse $\bar{V}_{sat}$, sont dites en élévation ; et celles selon une direction dans un deuxième plan perpendiculaire audit premier plan, et possédant une composante vectorielle parallèle à la vitesse $\bar{V}_{sat}$, sont dites en azimut.

Cette fauchée F est illuminée par des impulsions successives d'ondes hyperfréquence émises à la fréquence de répétition PRF, dont les réflexions constituent le signal radar qui sera reçu par la même antenne 101 fonctionnant en réception, et interprété pour en extraire les données radiométriques voulues. Un traitement par le calcul de ces données permet de reconstruire une image en deux dimensions de l'aire au sol sondée par le radar, lors du passage du satellite.

Pour illuminer la fauchée F à l'intérieur d'une zone accessible Z, un faisceau B de divergence angulaire $\beta$ est rayonné selon l'angle $\varphi$ par rapport au nadir.

Telle que montrée sur la figure 1, l'intersection de ce faisceau B avec le sol a une dimension F en largeur et une dimension S en longueur, selon la direction de la vitesse $\bar{V}_{sat}$. L'angle $\varphi$ peut prendre des valeurs comprises entre $\varphi m$ et $\varphi M$, et le faisceau B restera donc à l'intérieur de la zone accessible Z. Lors du déplacement du satellite, $\varphi$ reste constant pour une image donnée dans le cas d'un mode SAR classique.

Le faisceau B illumine chaque point du sol de la fauchée F à l'aide de I impulsions.

Ces impulsions seront exploitées lors du traitement de synthèse d'ouverture, généralement effectué au sol. Des valeurs typiques des différents paramètres pour les missions de télédétection déjà en vol sont par exemple :

| H(km) | F(km) | $\varphi m$ | S(km) | I | $\varphi M$ |
|-------|-------|-------------|-------|------|-------------|
| 800 | 20 | 20° | 4 | 1000 | 55° |

Les mesures successives sont utilisées de façon cohérente par le calcul, c'est-à-dire avec une phase pour chaque mesure qui est fonction du temps de manière à prendre en compte le déplacement du satellite entre les mesures successives.

Les mesures en azimut contiennent une composante Doppler, due à la vitesse du satellite dans le même plan que la visée du radar. Un radar haute résolution en azimut effectuera un filtrage sur le décalage Doppler de la fréquence du radar afin d'améliorer la cohérence de la sommation de signaux successifs.

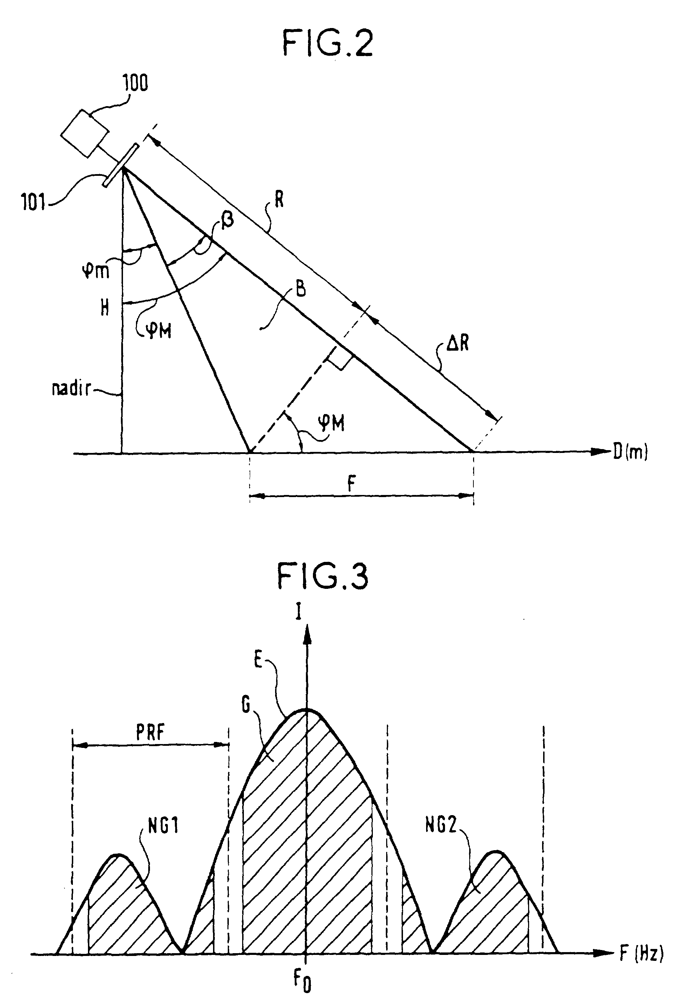

Dans le plan de l'élévation, tel que montré sur la figure 2, la mesure de la distance R à l'angle de visée en élévation est accompagnée d'une dispersion ΔR due à la divergence angulaire en élévation β du faisceau B. Cette dispersion peut être moyennée par le traitement de données du signal reçu à condition qu'elle ne soit pas trop importante, car si ΔR est plus grande que la distance parcourue par une impulsion avant l'émission de l'impulsion suivante, il en résulte une ambiguïté dans la mesure distance. Ceci impose une limite sur la fréquence maximale de répétition PRF pour une géométrie donnée :

$$PRF < \frac{c}{2F\sin\varphi M} \text{ ,}$$

où c est la vitesse de la lumière.

Autrement dit, pour une résolution donnée en azimut, le PRF est ordonné, et du même coup, la largeur maximale de la fauchée F est déterminée, à partir de la hauteur H de l'orbite et la relation ci-dessus.

L'exposé ci-dessus ne tient pas compte des lobes secondaires du faisceau B, qui existent forcément pour toute antenne de dimensions finies. Ces lobes secondaires donnent lieu à des ambiguïtés tant en azimut qu'en élévation (distance), tel que montré schématiquement sur la figure 3 pour les ambiguïtés d'azimut.

Sur la figure 3 est montré le diagramme d'antenne (considéré être le même en émission qu'en réception) comportant des lobes secondaires NG1 à gauche et NG2 à droite du lobe principal G au centre autour de $f_0$ en fréquence. En réception, seul les signaux du lobe principal G peuvent être interprétés de façon non ambiguë. Les lobes secondaires contiennent des signaux ambigus NG1 et NG2 espacés de ± PRF autour du lobe principal G.

En pratique, la PRF peut être choisie de telle façon que le signal ambigu qui correspond à la réflexion du nadir arrivera au radar pendant l'émission car la réflexion nadir et de loin le plus fort signal ambigu et il peut être éliminé de manière efficace moyennant cette astuce.

En contrepartie, cette contrainte peut obliger de nombreux sauts de PRF au cours de l'orbite, et à forte incidence, cette solution est parfois impossible. De plus, à faible incidence l'augmentation de PRF nécessaire peut être significative et impliquer des contraintes sur le débit de télémesures.

Afin de simplifier le sous-système d'amplification de l'onde hyperfréquence du système SAR destiné à prouduire des images qui contiennent des cibles ponctuelles ou diffuses, l'homme de l'art connaît la technique de compression d'impulsion, qui consiste à faire varier la fréquence d'émission lors de l'impulsion, selon une règle fréquence/temps appelée "chirp". L'emetteur fonctionne alors sur une durée plus grande sans nécessiter une puissance crête trop importante.

Lors de la réception d'échos de signaux étalés, l'écho reçu est corrélé avec la réplique qui correspond au signal émis dans cet écho, mais decalée dans le temps pour tenir compte du temps du trajet aller-retour du signal, et conjugué en phase. Ainsi en quelque sort, la règle inverse de "chirp" est appliquée par le calcul afin de "compresser" l'impulsion reçue. Tout signal reçu qui ne correspond à la règle de chirp utilisée pour compresser est défocalisé, et ne contribue pas de façon cohérente à l'image. La compression est utilisée aussi bien en azimut qu'en distance. Toutefois, cette compression est provoquée par l'homme de l'art en distance, alors qu'elle est naturellement générée en azimut par l'avancée du satellite en azimut.

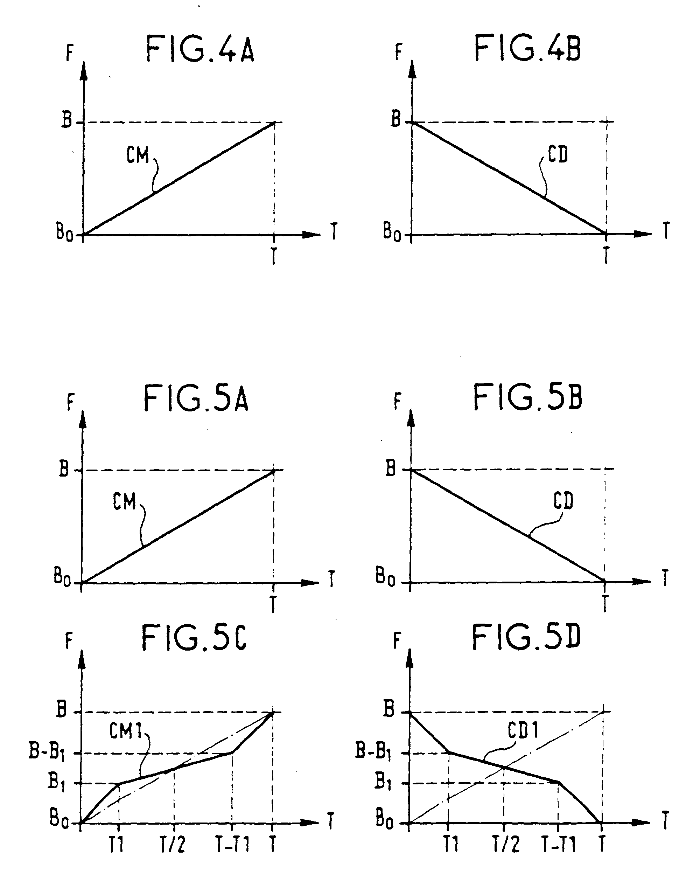

L'homme de l'art sait alterner la règle de chirp entre deux formes mutuellement symétriques, l'une montante CM, l'autre descendante CD telles que montrées sur les figures 4A, 4B, valable pour l'axe distance. Un tel système est décrit par exemple dans l'article intitulé "Range ambiguity suppression technique for the spaceborne synthetic aperture radar", par JHA, A.M.; ARCHANAY MAGNUDAR ; et PILLAI, N.S. ; publié par l'AIAA, suite au 39ᵉ Congrès de l'international astronautical federation, 1993.

Quand l'une des deux règles de chirp est utilisée pour compresser un signal reçu, toutes les ambiguïtés d'ordre impair sont désadaptées lors du traitement distance car elles ont une règle de variation de fréquence en fonction de temps contraire à celle du signal non ambigu. Les ambiguïtés d'ordre impair sont ainsi défocalisées et rejetées de la sommation cohérente des impulsions successives.

En revanche, les ambiguïtés d'ordre pair ont la même caractéristique fréquence-temps que le chirp du signal non ambigu, et seront additionnées de façon cohérente avec ce dernier, entraînant une dégradation de la qualité d'image (perte de contraste, réduction du rapport signal à bruit, perte de résolution,...).

D'autre part, les méthodes connues ne permettent pas d'étaler les ambiguïtés sur l'axe azimut.

L'invention a pour but de pallier les inconvénients de l'art antérieur, et d'améliorer les performances qui peuvent être réalisées par un radar SAR sans pour autant alourdir les coûts de réalisation de celui-ci.

A ces fins, l'invention propose un procédé de défocalisation d'ambiguïtés distance dans un radar impulsionnel notamment du type SAR, comprenant les étapes suivantes :

- étalement des impulsions radar à l'émission selon une pluralité de règles de variation de la fréquence de l'onde émise en fonction de temps, dites "chirps" ;
- alternance des règles de chirp lors de l'émission d'impulsions successives, entre des chirp montants et descendants dans le plan fréquence/temps de l'impulsion ;
- compression des échos reçus par un filtrage adapté utilisant une opération de corrélation entre le signal de l'écho reçu et la règle de chirp qui était appliquée au moment de l'émission de l'impulsion qui a donnée ledit signal d'écho ;

ladite pluralité de règles de variation de la fréquence de l'onde émise en fonction de temps comprend un nombre M desdites règles, avec M entier et supérieur ou égale à 3, ayant deux règles de chirp linéaires, l'une montante CM et l'autre descendante CD, caractérisé en ce que les 2(N-1) règles de chirp restantes comprennent une pluralité de pentes différents à l'intérieur de chaque chirp, avec des raccords continus en fréquence et en phase.

M peut contenir des formes d'onde montantes et/ou descendentes.

Selon une variante, l'invention propose un procédé ayant N règles de chirps montants et N règles de chirps descendants, caractérisé en ce que pour chaque règle de chirp montant il existe une règle de chirp descendant correspondante, ces deux règles ayant une forme mutuellement symétrique dans le plan fréquence-temps. Dans ce cas, M = 2N, mais on peut toujours en utiliser qu'une partie M' de ces 2N formes d'onde, auquel cas, seules les ambiguïtés jusqu'au rang (M'-1) sont atténuées.

Selon une autre caractéristique, l'invention propose un procédé où ladite pluralité de pentes est au moins égal à trois, et en ce que ces pentes oscillent autour de celle du chirp linéaire correspondant.

Selon une autre variante, l'invention propose un procédé où ladite pluralité de pentes est lissée par un polynôme ou tout autre courbe dérivable.

Selon une autre caractéristique, l'invention propose un procédé selon l'une quelconque des variantes déjà décrites, qui étalent les ambiguïtés dans l'axe distance,
caractérisé en ce qu'il comprend en outre les étapes suivantes, pour étaler les ambiguïtés dans l'axe azimut :

- coder la phase initiale de chaque impulsion à l'émission suivant une séquence donnée de phases initiales lors de l'émission d'impulsions successives ;
- réaliser la même séquence de phases initiales pour la réplique, en la décalant dans le temps pour tenir compte du temps du trajet aller-retour de l'écho ;
- introduire ladite réplique dans ledit filtrage adapté lors de ladite compression des échos reçus. La séquence de phase étant opposé exactement entre le signal reçu et la réplique correspondante, la compression distance n'est pas perturbée par ce codage, sauf si la réplique et l'écho ne correspondent pas (cas d'ambiguïté). Dans ce cas, les ambiguïtés seront défocalisées sur l'axe azimut.

Selon une autre caractéristique, le procédé de l'invention comprend en outre les étapes suivantes :

- coder la fréquence centrale de chaque impulsion à l'émission suivant une séquence donnée de fréquences lors de l'émission d'impulsions successives ;
- réaliser la même séquence de fréquences pour la réplique ;
- introduire ladite séquence de fréquences dans ledit filtrage adapté lors de ladite compression des échos reçus.

L'invention concerne également un radar à synthèse d'ouverture (SAR) mettant en oeuvre l'un quelconque des procédés de l'invention ou de l'une de ses variantes.

D'autres caractéristiques et avantages de l'invention apparaîtront à la lecture de la description détaillée qui suit de quelques exemples de procédés selon l'invention et ses principales variantes avec ses dessins annexés donnés à titre d'exemples non limitatifs, dont

- la figure 1 déjà décrite qui montre schématiquement un radar à synthèse d'ouverture (SAR) connu de l'art antérieur, et embarqué sur un satellite défilant ;
- la figure 2 déjà décrite qui montre schématiquement et dans le plan de l'élévation, la dispersion en distance résultante de la divergence angulaire du faisceau radar ;
- la figure 3, déjà décrite qui montre schématiquement l'origine des ambiguïtés d'azimut dues aux lobes secondaires du diagramme antenne du radar SAR,
- les figures 4A et 4B, déjà évoquées, montrent schématiquement des formes d'ondes émises, dans le plan fréquence-temps, selon un procédé de l'homme de l'art antérieur, apte à atténuer des ambiguïtés d'ordre impair ;
- les figures SA, 5B, 5C, 5D montrent schématiquement dans le plan fréquence-temps un exemple de quatre formes d'ondes émises successivement dans un procédé selon l'invention de défocalisation d'ambiguïtés sur l'axe distance ;

- la figure 6 montre schématiquement et en organigramme les principales étapes d'un exemple de procédé selon l'invention, de défocalisation d'ambiguïtés sur l'axe distance ;
- la figure 7, montre schématiquement et en organigramme les principales étapes d'une variante avantageuse du procédé de l'invention, comportant également une défocalisation d'ambiguïtés sur l'axe azimut, par codage de la phase initiale des impulsions successives ;
- la figure 8, montre schématiquement un résultat d'un procédé selon l'invention, à savoir, la corrélation de la réplique azimut avec un chirp ambigu non décodé à la réception, suivant un codage aléatoire de phase initiale impulsion par impulsion ;
- les figures 9A, 9B, 9C, 9D montrent schématiquement et dans le plan fréquence-temps, une autre variante de formes d'ondes émises successivement en alternance avec les formes d'ondes des figures 4A, 4B, dans un autre exemple d'un procédé selon l'invention ;
- les figures 10A, 10B, 10C, 10D montrent schématiquement et dans le plan fréquence-temps, une autre variante de formes d'ondes émises successivement en alternance avec les formes d'ondes des figures 4A, 4B, dans un autre exemple d'un procédé selon l'invention.

Sur les figures les mêmes repères se réfèrent aux mêmes éléments. L'échelle de dimensions physiques n'est pas toujours respectée pour des raisons de clarté.

Comme il a déjà été expliqué avec références aux figures 4A et 4B, l'utilisation en alternance d'un chirp montant CM et un chirp descendant CD linéaires permet de défocaliser des ambiguïtés d'ordre impair sur l'axe distance selon un procédé connu de l'art antérieur.

En revanche, les ambiguïtés d'ordre pair persistent, car toutes les impulsions paires sont identiques entre elles, à partir de n'importe qu'elle impulsion dans le train d'impulsions émises.

L'utilisation d'une pluralité de règles de variation de la fréquence de l'onde émise en fonction de temps comprenant un nombre pair M desdites règles, avec M entier et supérieur à 2, permet de défocaliser les ambiguïtés d'ordre P tel que $P \neq M$ ; P entier.

Les figures 5A, 5B, 5C, 5D montrent un exemple simple de quatre formes d'ondes émises lors d'impulsions successives dans un procédé selon l'invention, qui permet d'étaler les ambiguïtés d'ordre 2+i2N sur l'axe distance, avec N=2.

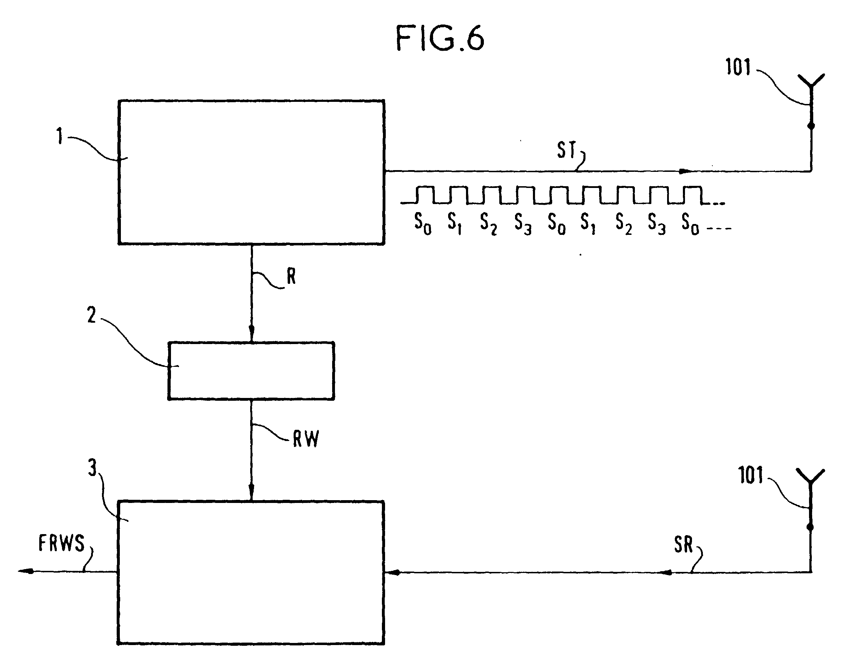

Comme il sera montré sur la figure 6, le train d'impulsions émises consiste en une répétition cyclique des quatre formes d'ondes : les deux formes connues de l'art antérieur et montrées sur les figures 4A, 4B et deux nouvelles formes d'ondes montrées sur les figures 5C, 5D.

La première forme d'onde émise dans cet exemple d'un procédé selon l'invention est montrée sur la figure SA, qui représente un chirp montant CM linéaire, partant d'une fréquence arbitraire B0 à temps t = 0 à une fréquence B à un temps t = T.

La deuxième forme d'onde de cet exemple est montrée sur la figure 5B, qui représente un chirp descendant CD linéaire, partant d'une fréquence B à temps t = = 0, pour arriver à une fréquence arbitraire B0 à temps t = T.

La troisième forme d'onde de cet exemple est montrée sur la figure 5C qui représente un chirp descendant non linéaire CM1. Cette forme d'onde est "doublement brisée", et présente des variations non linéaires de fréquence en fonction de temps, e.g. des variations des pentes de fréquence à l'intérieur des fonctions globalement montante et descendante.

L'impulsion suivante (fig. 5D) aura une forme descendante similaire mais avec une pluralité de pentes globalement descendantes dans le plan fréquence-temps.

La forme d'onde montrée sur les figures 5C, 5D est composée dans le plan fréquence-temps de trois segments linéaires de pente différente, paramétrés par B1 et T1, qui sont respectivement la bande (B1) et la durée (T1) des premier et troisième segments. Les paramètres tels la bande émise, la durée totale de l'impulsion, et l'amplitude du signal, sont par exemple identiques à ceux du chirp linéaire. La phase est maintenue constante aux points singuliers pour éviter les sauts de phase qui dégradent la réponse impulsionnelle.

Une pondération, par exemple de Hamming, peut être appliqué en temporel comme pour le chirp classique afin d'améliorer la qualité de la réponse impulsionnelle. La pondération de Hamming, telle que connue de l'homme de l'art, est une pondération classique pour les SAR, ayant la forme

$$s(t) = a(t) \cdot \left[ 1 - (1 - \alpha) \cos\left( \frac{2\pi(t - t_0)}{T} \right) \right]$$

avec T = période du signal

$t_0$ = origine du temps

$\alpha$ = coefficient de Hamming

$(0.5 \leq \alpha \leq 1)$.

L'intérêt de cette forme d'onde est de ressembler suffisamment au chirp linéaire pour garder des paramètres de réponse impulsionnelle corrects, tout en ayant les différences de pente nécessaires pour la désadaptation avec la réplique du chirp linéaire, afin de défocaliser les ambiguïtés éventuelles provenant des impulsions ayant la forme d'onde de chirp linéaire.

Sur l'exemple des figures 5C, 5D, les chirps CM, CD1 sont "brisés" pour présenter une variation de pente autour des pentes linéaires CM, CD des figures 5A, 5B respectivement. Dans l'exemple montré sur ces figures 5C, 5D les chirps CM1, CD1 sont "brisés" de manière à exhiber trois pentes différentes de la caractéristique fréquence-temps pour chaque impulsion émise.

Tout comme les chirps classiques montrés sur les figures 5A, 5B, la dérive de fréquence est de B sur un temps T, seulement le chirp dans les deux impulsions montrées sur les figures 5C, 5D n'est pas linéaire.

En effet, sur la figure 5C, on voit que la pente ou la dérive de fréquence B1 sur la période T1 est plus importante que pour la chirp linéaire.

Ensuite, dans cet exemple, la pente de fréquence entre T1 et T-T1 est inférieur à la pente du chirp linéaire CM (fig.5A) pour faire évoluer la fréquence entre B1 et B-B1. Pour rattraper, la pente est plus importante pendant la période T-T1 à T, faisant monter la fréquence du chirp depuis B-B1 jusqu'à B. Ces pentes différentes de la pente du chirp CM sont à l'origine de la mauvaise compression des échos ambigus.

Sur la figure 5D, on voit que le quatrième chirp CD1 descendant est brisé de manière symétrique dans cet exemple (par rapport à fig. 5C). Dans un autre exemple de formes d'ondes qui conviennent pour la réalisation de l'invention (voir figs. 10A-D), le chirp descendant CD3 peut avoir une forme antisymétrique au chirp montant. En toute rigueur, la forme du chirp descendant n'a pas besoin d'avoir une corrélation quelconque avec le chirp montant, ce n'est qu'une facilité adoptée pour expliquer le principe de l'invention. Ceci peut également servir dans une réalisation préférée de l'invention, car si une forme d'onde répond au besoin, son symétrique sera également adapté au problème, car la forme d'onde symétrique descendante se comportera par rapport à CD de la même manière que la forme montante se comporte par rapport à CM (atténuation d'au moins 10 dB du niveau de corrélation).

La forme symétrique de la figure 5D descend donc de la fréquence B à B-B1 pendant la première période T1 avec une pente importante et ensuite avec une pente moins importante entres les moments T1, T-T1, la fréquence descend de B-B1 à B1. Finalement, le chirp se termine en descendant de B1 à une fréquence arbitraire B0.

Les paramètres choisis pour un jeu de valeurs données (bande émise, durée totale de l'impulsion, coefficient de pondération) le seront pour optimiser le compromis entre la qualité de la réponse impulsionnelle et la réduction des ambiguïtés. A titre d'exemple non limitatif, nous donnons quelques valeurs numériques pour illustrer la description du chirp, sans que ces valeurs ne soient considérées comme obligatoires ni même préférées pour la réalisation de l'invention. Les paramètres classiques d'un SAR spatial haute résolution sont les suivants :

- Gain de compression distance : 1000
- Bande émise : 100 MHz
- Durée de l'impulsion : 10 $\mu$s
- Coefficient de pondération : 0.54

Avec ce jeu de paramètres, un chirp doublement brisé peut être optimisé avec :

- B1 = 25 MHz
- T1 = 2.41 $\mu$s.

Le tableau suivant donne les performances théoriques d'un chirp ayant ces caractéristiques ainsi que celles d'un chirp linéaire classique montré sur les figures 4A et 4B. Les performances des chirps descendants (figures 5B, 5D) sont identiques à celles des chirps montants (figures 5A, 5C, respectivement).

| Paramètres qualité | chirp linéaire classique | chirp doublement brisé |
|---|---|---|
| résolution 3dB | $1.30 \ 10^{-8}$s | $1.34 \ 10^{-8}$s (+3%) |
| PSLR | -43.7 dB | -37.1 dB |
| ISLR | -19.8 dB | -19.1 dB |

PSLR et ISLR sont des critères de la qualité d'une réponse impulsionnelle bien connues de l'homme de l'art : PSLR est l'acronyme anglais de "Peak side lobe ratio", ou le niveau maximum des lobes secondaires relativement au lobe principal; et ISLR est l'acronyme pour "integrated side lobe ratio", ou l'énergie contenue dans les lobes secondaires rélative à l'énergie contenue dans le lobe principal.

La table suivante indique la réduction théorique sur les ambiguïtés distance de rang 1, 2 et 3 de chaque côté :

| Ambiguïtés -1 et 3 | Ambiguïtés -2 et 2 | Ambiguïtés -3 et 1 |
|---|---|---|
| -27.0 dB | -10.0 dB | -27.6 dB |

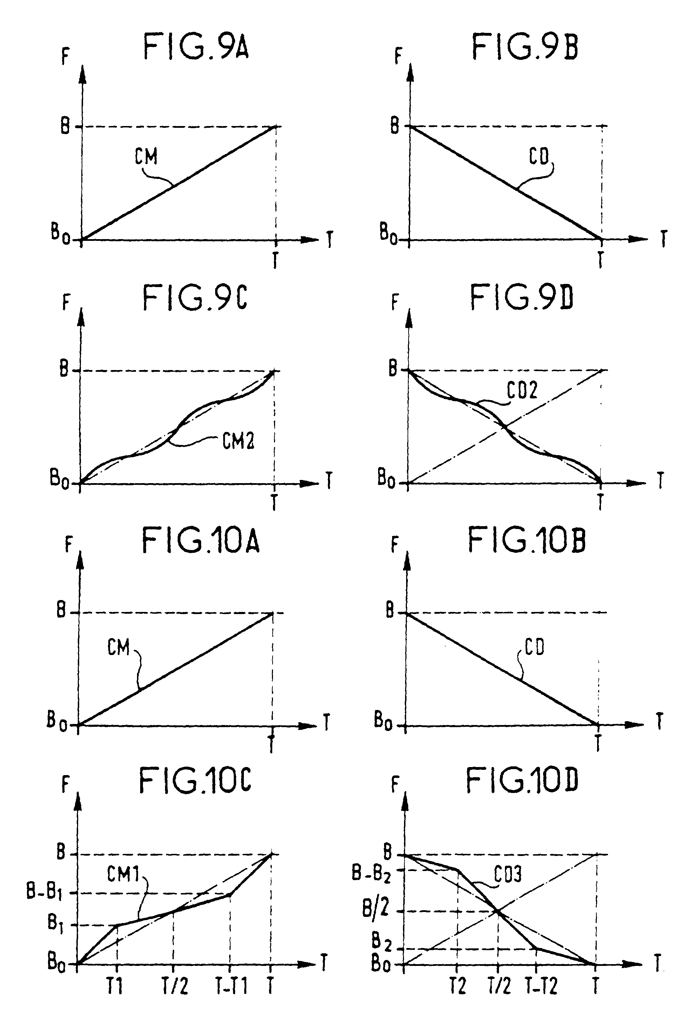

Le chirp doublement brisé peut être remplacé par une forme d'onde ayant les mêmes segments mais raccordés par des morceaux de paraboles (voir figures 9A, 9B, 9C, 9D).

La figure 6 montre schématiquement et en organigramme les principales étapes d'un exemple de procédé selon l'invention.

Dans la première étape 1, un train d'impulsions $S_0$, $S_1$, $S_2$, $S_3$, $S_0$, $S_1$, $S_2$ ... est généré, par exemple à l'aide d'un générateur numérique d'impulsions. Ces impulsions $S_0$, $S_1$, $S_2$, $S_3$ auront des chirps différents, tel que montré sur les figures SA, 5B, 5C, 5D ; 9A, 9B, 9C, 9D ; ou 10A, 10B, 10C, 10D par exemple. Le train d'impulsions est amplifié à un niveau de puissance convenable pour former un signal transmission ST qui sera émis par l'antenne d'émission/réception 101. Les formes d'onde qui constituent les impulsions successives $S_0$, $S_1$, $S_2$, $S_3$ sont utilisées pour construire les répliques adaptées $R_0$, $R_1$, $R_2$, $R_3$ (désignées par R sur la figure) à $S_0$, $S_1$, $S_2$, $S_3$ respectivement qui sont ensuite pondérées pour fournir des répliques adaptées et pondérées $RW_0$, $RW_1$, $RW_2$, $RW_3$ (désignées par RW sur la figure). La réplique adaptée $RW_0$ est bien la forme d'angle conjuguée complexe et pondérée de l'impulsion $S_0$. Elle n'est pas une réplique adaptée pour les autres impulsions :

$$\int_{-\infty}^{\infty} R_0(\tau)S_0(\tau)d\tau = \int_{-\infty}^{\infty} S_0^{\bullet}(\tau)S_0(\tau)d\tau = 1$$

pour t=0, et sans pondération d'amplitudes.

Dans une troisième étape 3, le signal reçu SR sur l'antenne émission/réception 101 est soumis à un filtrage adapté pour la compression distance. Le signal reçu SR, pour une impulsion émise donnée par exemple $S_0$, comprend un écho radar principal $s_0$ et des échos ambigus

$$\sum_i s_i$$

provenant d'autres impulsions dans le train d'impulsions ST :

$$SR = s_0 + \sum_i s_i .$$

Le filtrage adapté 3 est obtenu par une opération de corrélation entre le signal reçu et la réplique $RW_0$ adaptée à $S_0$, pour donner un signal filtré $FRWS_0$.

$$FRWS_0(\tau) = \int_{-\infty}^{\infty} SR(t)RW_0(t-\tau)dt$$

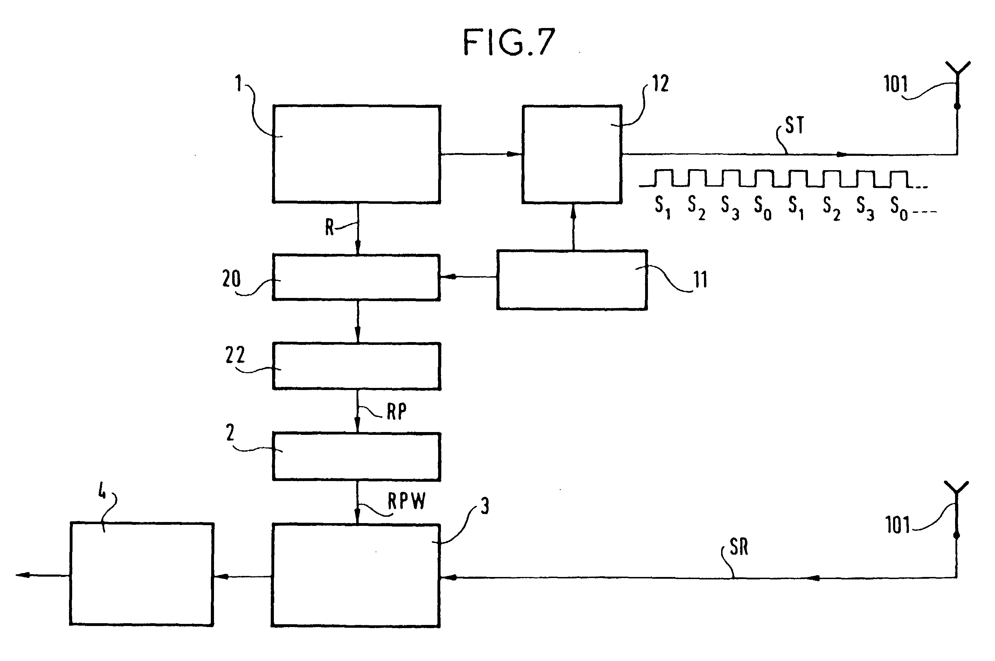

La figure 7 montre schématiquement et en organigramme les principales étapes d'une variante du procédé de l'invention, comportant une défocalisation d'ambiguïtés sur l'axe azimut par codage de la phase initiale des impulsions successives. L'exemple de procédé de la figure 7 comporte les mêmes étapes 1, 2, 3 pour le filtrage adapté pour la compression distance, augmenté par quelques étapes spécifiques pour le filtrage adapté pour la compression azimut.

**EP 0 749 019 B1**

Dans le procédé de la figure 7, après la génération 1 des formes d'onde, il y a également une génération de code 11 qui peut être par exemple une séquence de phases initiales à appliquer à des impulsions successives, ou encore une séquence de codage de la fréquence centrale qui changerait entre des impulsions successives.

Le code ainsi généré est appliqué sur les formes d'ondes dans l'étape 12 avant amplification et émission du train d'impulsions $S_0$, $S_1$, $S_2$, $S_3$, $S_0$... qui constituent le signal transmission ST via l'antenne émission-réception 101.

Le codage en phase initiale ou en fréquence centrale analogue à celle de l'étape 12 est décalé de n rangs d'ambiguïtés dans l'étape 20 pour tenir compte du temps du trajet aller-retour de l'écho et qu'ainsi, la séquence de code des répliques correspond à la séquence de codage des échos. Cette séquence de codage est appliquée avec le signe opposé sur ces répliques $R_0$, $R_1$, $R_2$, $R_3$, $R_0$, ... qui sont fournies par le générateur 1 pour donner la réplique adaptée et codée RP (codée en phase initiale ou fréquence centrale).

Ce signal RP sera pondéré dans l'étape 2 comme dans le procédé de la figure 6 pour fournir la réplique adaptée codée et pondérée RPW.

Tout comme dans le procédé de la figure 6, le signal reçu SR sur l'antenne émission/réception 101 est soumis à l'étape de filtrage adapté pour la compression distance par une opération de corrélation 3 avec le signal RPW. Cette opération de corrélation 3 aura pour résultat une bonne compression distance de l'écho principal par exemple $s_0$ si la réplique est $R_0$ car leur codages correspondent et s'annulent lors de l'étape 3 (phase initiale $\varphi_0$ ou fréquence centrale : $f + \Delta f_0$ pour l'écho, phase initiale $-\varphi_0$ ou fréquence centrale $f-\Delta f_0$ pour la réplique), et une mauvaise compression distance des échos ambigus par exemple $S_{i\neq0}$.

Le signal ainsi corrélé pour la compression distance est ensuite soumis à une étape finale 4 de filtrage adapté pour la compression azimut par une deuxième opération de corrélation 4 qui aura pour résultat un étalement des chirps azimut ambigus et une mauvaise compression azimut des échos ambigus par exemple $s_{i\neq0}$.

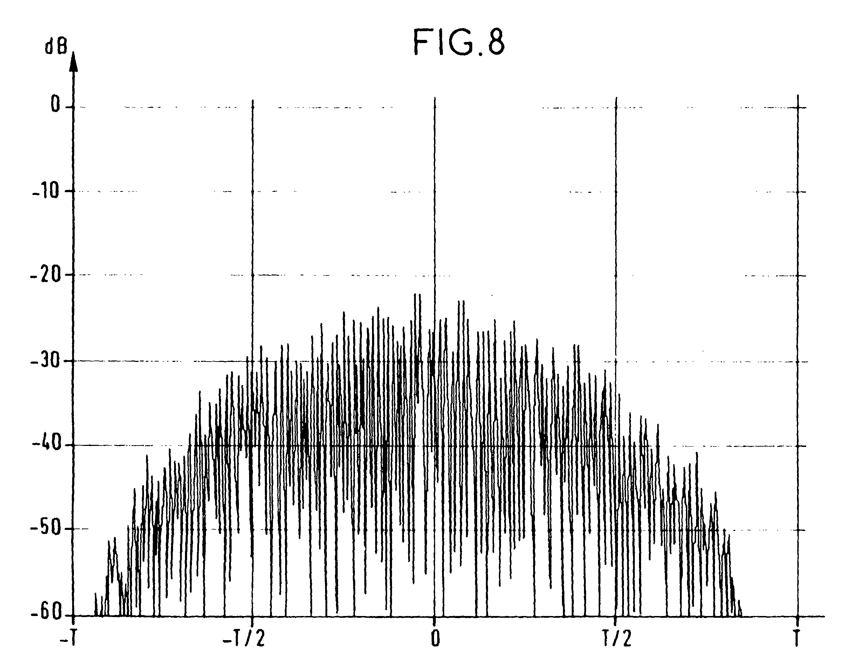

La figure 8 montre schématiquement un exemple d'un résultat obtenu d'un procédé selon l'invention, à savoir la corrélation de la réplique azimut avec un chirp azimut ambigu non décodé à la réception, suivant un codage aléatoire de phase initiale impulsion par impulsion tel qu'expliqué en référence à la figure 7. Le codage utilisé dans la figure 8 est une phase aléatoire 0 ou $\Pi$ appliquée sur une longueur de codage de 1000 mots.

Bien entendu, le niveau de réduction d'ambiguïtés dépend du type de codage utilisé et du gain de compression azimut. La longueur du code de phase doit être supérieure au rang d'ambiguïté maximum que l'on veut défocaliser. En général, plus le code est long, plus il est efficace. Tel que montré sur la figure 8, le codage aléatoire en phase (O, $\Pi$) sur le chirp azimut de 1000 impulsions, soit un code de 1000 mots, réduit les ambiguïtés de 20dB environ par rapport à l'autocorrélation d'un chirp azimut linéaire. En revanche, un code de 10 mots répété 1000 fois ne réduit que de -10dB et seulement les neuf premières ambiguïtés de chaque côté.

D'autres codages peuvent avoir une efficacité équivalente, par exemple un codage en $\Pi$/N ou encore un codage pseudo-aléatoire réparti entre O et $2\Pi$. Le codage sera aussi choisi en fonction des capacités du générateur numérique d'impulsions du radar. Un autre codage possible consiste à faire varier la fréquence centrale de la bande d'impulsion suivant une séquence pseudo-aléatoire au lieu de faire varier la phase initiale de chaque impulsion.

Les figures 9A, 9B, 9C, 9D, montrent un autre exemple d'une série de formes d'ondes qui peuvent être utilisées pour défocaliser des ambiguïtés sur l'axe distance, selon une autre variante du procédé selon l'invention. Les figures 9A, 9B sont identiques aux figures 4A, 4B et montrent des chirps linéaires montant CM et descendant CD respectivement dans le plan fréquence-temps. Les figures 9C et 9D montrent des chirps respectivement montant CM2 et descendant CD2 qui ont des formes d'ondes qui oscillent autour des chirps linéaires suivant une règle polynôme.

Les figures 10A, 10B, 10C, 10D montrent une autre série de formes d'ondes d'impulsions successives qui peuvent être utilisées dans une autre variante du procédé de l'invention. Les trois premières formes d'onde CM, CD, CM1 sont identiques à celles des figures 5A, 5B, 5C ; alors que la forme d'onde CD3 de la figures 10D est antisymétrique par rapport à celle CM1 de la figure 10C.

En effet, les paramètres de bande B2 et de durée T2 des différentes pentes du chirp doublement brisé de la figure 10D ne sont pas ceux du chirp CM1 de la figure 10C comme dans le cas des figures 5A, 5B, 5C, 5D ; néanmoins, les résultats obtenus sont tout à fait comparables à ce dernier cas.

Les différents variantes du procédé selon l'invention permettent d'obtenir des améliorations des performances du radar allant de 10dB à 30dB de réduction d'ambiguïtés d'ordre supérieur. En effet, la défocalisation sur l'axe distance des ambiguïtés d'ordre 2, -2 permet une réduction de 10 dB environ de ces ambiguïtés qui persistent intégralement dans les solutions connues de l'art antérieur. Les ambiguïtés de rang 1 et 3 ont la même réduction dans le procédé selon l'invention que dans celui de l'art antérieur, de -27dB environ.

La défocalisation d'ambiguïtés sur l'axe azimut permet de gagner une réduction de -20dB environ sur toutes les ambiguïtés en plus des réductions acquises par la défocalisation sur l'axe distance. En particulier, cette solution peut s'appliquer sur l'écho nadir quelque soit la PRF du système.

Si l'on utilise les deux techniques de réduction par défocalisation sur l'axe distance et défocalisation sur l'axe azimut simultanément, on peut réduire théoriquement de -30dB environ toutes les ambiguïtés distance en accumulant les avantages de deux manières de défocaliser.

Cette amélioration de la qualité image peut être mise à profit pour réduire le gabarit d'antenne (à performances égales) c'est à dire relâcher les contraintes sur les raideur de flancs de lobes d'antenne ainsi que la profondeur du trou nadir, et donc de réduire la complexité, le coût, la masse et l'encombrement de l'antenne embarquée.

Le procédé de l'invention peut être utilisé avec M formes d'ondes différentes en fonction du nombre d'ambiguïtés à réduire (M-1). Les M formes d'onde peuvent être montantes ou descendantes.

L'invention permet également de réduire un éventuel brouillage de déception, par émission de faux échos, rendant le radar SAR de l'invention plus robuste face à des contre-mesures électroniques.

Bien entendu, l'homme de l'art imaginera facilement d'autres variantes du procédé de l'invention que celles décrites en détail à titre d'exemples non limitatifs sans sortir pour autant du cadre de l'invention.

## Revendications

**1.** Procédé de défocalisation des ambiguïtés distance dans un radar impulsionnel notamment du type SAR, comprenant les étapes suivantes :

- étalement des impulsions radar à l'émission selon une pluralité de règles de variation de la fréquence de l'onde émise en fonction de temps, dites "chirps" ;
- alternance des règles de chirp lors de l'émission d'impulsions successives, entre des chirp montants et descendants dans le plan fréquence/temps de l'impulsion ;
- compression des échos reçus par un filtrage adapté utilisant une opération de corrélation entre le signal de l'écho reçu et la règle de chirp qui était appliqué au moment de l'émission de l'impulsion qui a donnée le dit signal d'écho ;
- ladite pluralité de règles de variation de la fréquence de l'onde émise en fonction de temps comprend un nombre M desdites règles, avec M entier et supérieur ou égale à 3,
- ledit procédé étant **caractérisé en ce qu'**au moins l'une desdites M règles de chirp comprennent une pluralité de pentes différents à l'intérieur de chaque chirp, avec des raccords continus en fréquence et en phase.

**2.** Procédé selon la revendication 1, ayant un nombre pair M = 2N règles de chirps, avec N entier et supérieur à 1.

**3.** Procédé selon la revendication 2, ayant N règles de chirps montants et N règles de chirps descendants, **caractérisé en ce que** pour chaque règle de chirp montant il existe une règle de chirp descendant correspondante, ces deux règles ayant une forme mutuellement symétrique dans le plan fréquence-temps.

**4.** Procédé selon la revendication 3, ayant N règles de formes d'onde montantes convenant à la réduction des ambiguïtés, utilisées avec ou sans des chirps linéaires classiques, avec ou sans l'alternance des pentes

**5.** Procédé selon la revendication 3, **caractérisé en ce que** ladite pluralité de pentes est au moins égal à trois, et **en ce que** ces pentes oscillent autour de celle du chirp linéaire correspondant.

**6.** Procédé selon la revendication 5, **caractérisé en ce que** ladite pluralité de pentes est lissée par un polynôme ou tout autre courbe dérivable.

**7.** Procédé selon l'une quelconque des revendications précédentes, **caractérisé en ce qu'**il comprend en outre les étapes suivants :

- coder la phase initiale de chaque impulsion à l'émission suivant une séquence donnée de phases initiales lors de l'émission d'impulsions successives ;
- réaliser la même séquence de phases initiales pour le réplique ;
- introduire ladite séquence de phases dans ledit filtrage adapté lors de ladite compression des échos reçus.

**8.** Procédé selon l'une quelconque des revendications précédentes, **caractérisé en ce qu'**il comprend en outre les étapes suivantes :

- coder la fréquence centrale de chaque impulsion à l'émission suivant une séquence donnée de fréquences lors de l'émission d'impulsions successives ;
- réaliser la même séquence de fréquences pour la réplique ;
- introduire ladite séquence de fréquences dans ledit filtrage adapté lors de ladite compression des échos reçus.

**9.** Radar à synthèse d'ouverture, comprenant :

- Des moyens pour l'étalement des impulsions radar à l'émission selon une pluralité de règles de variation de la fréquence de l'onde émise en fonction de temps, dites « chirps » ;
- Des moyens pour l'alternance des règles de chirp lors de l'émission d'impulsions successives, entre des chirp montants et descendants dans le plan fréquence/temps de l'impulsion ;

Des moyens pour la compression des échos recus par un filtrage adapté utilisant une opération de corrélation entre le signal de l'écho recu et la règle de chirp qui était appliqué au moment de l'émission de l'impulsion qui a donné ledit signal d'écho ;

- ladite pluralité de règles de variation de la fréquence de l'onde émise en fonction de temps comprend un nombre M desdites règles, avec M entier et supérieur ou égale à 3,

Ledit radar à synthèse d'ouverture étant **caractérisé én ce qu'**au moins l'une desdites M règles de chirp comprennent une pluralité de pentes différents à l'intérieur de chaque chirp, avec des raccords continus en fréquence et en phase.


## Patentansprüche

**1.** Verfahren zur Defokusierung von Abstandsmehrdeutigkeiten in einem Impulsradar, insbesondere vom SAR-Typ, mit folgenden Schritten:

- Spreizen der Radarimpulse beim Senden nach einer Mehrzahl von Regeln zur Frequenzveränderung der gesendeten Welle in Abhängigkeit der Zeit, als "Chirps" bezeichnet;
- Abwechseln der Chirp-Regeln beim Senden von aufeinanderfolgenden Impulsen zwischen in der Frequenz-Zeit-Ebene aufsteigenden und absteigenden Chirps des Impulses;
- Komprimieren der empfangenen Echos durch eine geeignete Filterung, die eine Korrelationsoperation zwischen dem empfangenen Echo und der beim Zeitpunkt des Sendens des Impulses, der das Echosignal geliefert hat, angewendeten Chirp-Regel einsetzt;
- wobei die Mehrzahl von Regeln zur Veränderung der Frequenz der gesendeten Welle in Abhängigkeit von der Zeit eine Anzahl M dieser Regeln umfasst, wobei M eine ganze Zahl und größer oder gleich 3 ist,
- **dadurch gekennzeichnet, dass** wenigstens eine der M Chirp-Regeln eine Mehrzahl von unterschiedlichen Steigungen innerhalb jedes Chirps mit kontinuierlichen Frequenz- und Phasenübergängen aufweist.

**2.** Verfahren nach Anspruch 1, mit einer geraden Anzahl M=2N Chirp-Regeln, wobei N eine ganze Zahl und größer als 1 ist.

**3.** Verfahren nach Anspruch 2, mit N aufsteigenden und N absteigenden Chirp-Regeln, **dadurch gekennzeichnet, dass** zu jeder aufsteigenden Chirp-Regel eine entsprechende absteigende Chirp-Regel existiert, wobei die zwei Regeln eine zueinander symmetrische Form in der Frequenz-Zeit-Ebene haben.

**4.** Verfahren nach Anspruch 3, mit N Regeln mit aufsteigender Wellenform, die zur Verminderung der Mehrdeutigkeiten geeignet sind, die mit oder ohne herkömmliche lineare Chirps, mit oder ohne Wechsel der Steigung eingesetzt werden.

**5.** Verfahren nach Anspruch 3, **dadurch gekennzeichnet, dass** die Mehrzahl von Steigungen wenigstens gleich 3 ist, und **dass** die Steigungen um die des entsprechenden linearen Chirps oszillieren.

**6.** Verfahren nach Anspruch 5, **dadurch gekennzeichnet, dass** die Mehrzahl von Steigungen durch ein Polynom oder eine beliebige andere differenzierbare Kurve geglättet wird.

**7.** Verfahren nach einem beliebigen der vorhergehenden Ansprüche, **dadurch gekennzeichnet, dass** es ferner die folgenden Schritte umfasst:

- Codieren der Anfangsphase jedes Impulses beim Senden gemäß einer gegebenen Abfolge von Anfangsphasen beim Senden von aufeinanderfolgenden Impulsen;

- Realisieren der gleichen Abfolge von Anfangsphasen für die Antwort;
- Einfügen der Abfolge von Phasen in die angepasste Filterung bei der Kompression der empfangenen Echos.

8. Verfahren nach einem beliebigen der vorhergehenden Ansprüche, **dadurch gekennzeichnet, dass** es ferner die folgenden Schritte umfasst:

- Codierung der Mittenfrequenz jedes Impulses beim Senden gemäß einer gegebenen Abfolge von Frequenzen beim Senden von aufeinanderfolgenden Impulsen;
- Realisieren der gleichen Abfolge von Frequenzen für die Antwort;
- Einführen der Abfolge von Frequenzen in die angepasste Filterung bei der Kompression der empfangenen Echos.

9. Radar mit synthetischer Apertur, welches umfasst:

- Mittel zum Spreizen der Radarimpulse beim Senden nach einer Mehrzahl von Regeln zur Veränderung der Frequenz der gesendeten Welle als Funktion der Zeit, als "Chirps" bezeichnet;
- Mittel zum Abwechseln der Chirp-Regeln beim Senden von aufeinanderfolgenden Impulsen zwischen in der Frequenz-Zeit-Ebene des Impulses aufsteigenden und absteigenden Chirps;
- Mittel zum Komprimieren der empfangenen Echos durch eine angepasste Filterung unter Verwendung einer Korrelationsoperation zwischen dem empfangenen Echosignal und der Chirp-Regel, die zum Zeitpunkt des Sendens des Impulses, der zu dem Echosignal geführt hat, angewendet wurde;
- wobei die Mehrzahl von Regeln zur Veränderung der Frequenz der gesendeten Welle als Funktion der Zeit eine Anzahl M dieser Regeln umfasst, wobei M eine ganze Zahl und größer oder gleich 3 ist,

**dadurch gekennzeichnet, dass** wenigstens eine der M Chirp-Regeln eine Mehrzahl von unterschiedlichen Steigungen innerhalb jedes Chirps mit kontinuierlichen Frequenz- und Phasenübergängen aufweist.

## Claims

1. A method of defocusing range ambiguities in a pulse radar, in particular of the SAR type, the method comprising the following steps:

· radar pulses are spread on transmission by using a plurality of "chirp" rules for varying the frequency of the transmitted wave as a function of time;
· during transmission of successive pulses, chirp rules are alternated between chirps that rise and chirps that fall in the frequency/time plane of the pulse;
· received echoes are compressed by matched filtering using a correlation operation between the received echo signal and the chirp rule that was applied at the time of transmission of the pulse that gave rise to said echo signal;
· said plurality of rules for varying the frequency of the transmitted wave as a function of time comprise a number M of said rules, with M being an integer greater than or equal to 3;
· said method being **characterized in that** at least one of said M chirp rules comprises a plurality of different slopes within each chirp, with connections between slopes that are continuous in frequency and phase.

2. A method according to claim 1, having an even number M=2N chirp rules, where N is integer and greater than 1.

3. A method according to claim 2, having N rising chirp rules and N falling chirp rules, **characterized in that** for each rising chirp rule there exists a corresponding falling chirp rule, said corresponding pairs of rules being mutually symmetrical in shape in the frequency/time plane.

4. A method according to claim 3, having N rising waveform rules suitable for reducing ambiguities, used with or without conventional linear chirp, and with or without alternating slopes.

5. A method according to claim 3, **characterized in that** said plurality of slopes is equal to at least three, and **in that** said slopes oscillate about the slope of the corresponding linear chirp.

6. A method according to claim 5, **characterized in that** said plurality of slopes is smoothed by a polynomial or by other differentiable curve.

7.  A method according to any preceding claim, **characterized in that** it further comprises the following steps:

> · the initial phase of each pulse is encoded on transmission in application of a given sequence of initial phases for the transmission of successive pulses;
> · the same sequence of initial phases is applied for the replica; and
> · said sequence of phases is injected into said matched filtering during compression of the received echoes.

8.  A method according to any preceding claim, **characterized in that** it further comprises the following steps:

> · the center frequency of each pulse is encoded on transmission in application of a given sequence of frequencies for transmission of successive pulses;
> · the same sequence of frequencies is applied for the replica; and
> · said sequence of frequencies is injected into said matched filtering during said compression of the received echoes.

9.  A synthetic aperture radar, comprising:

> · means for spreading radar pulses on transmission by using a plurality of "chirp" rules for varying the frequency of the transmitted wave as a function of time;
> · during transmission of successive pulses, means for alternating chirp rules between chirps that rise and chirps that fall in the frequency/time plane of the pulse; and
> · means for compressing received echoes by matched filtering using a correlation operation between the received echo signal and the chirp rule that was applied at the time of transmission of the pulse that gave rise to said echo signal;
> · said plurality of rules for varying the frequency of the transmitted wave as a function of time comprise a number M of said rules, with M being an integer greater than or equal to 3,

said synthetic aperture radar being **characterized in that** at least one of said M chirp rules comprises a plurality of different slopes within each chirp, with connections between slopes that are continuous in frequency and phase.

# FIG. 1

# FIG.2

# FIG.3

## FIG.4A

## FIG.4B

## FIG.5A

## FIG.5B

## FIG.5C

## FIG.5D

# FIG.6

ST

$S_0$  $S_1$  $S_2$  $S_3$  $S_0$  $S_1$  $S_2$  $S_3$  $S_0$ ---

101

R

RW

FRWS

SR

101

EP 0 749 019 B1

# FIG.7

EP 0 749 019 B1

# FIG.8

EP 0 749 019 B1

# FIG.9A

# FIG.9B

# FIG.9C

# FIG.9D

# FIG.10A

# FIG.10B

# FIG.10C

# FIG.10D